# EUROPEAN PATENT APPLICATION

(11) **EP 4 725 638 A1**
(43) Date of publication of application: **15.04.2026**
(21) Application number: 25207502.3
(22) Date of filing: 08.10.2025
(51) Int. Cl.: B23K 26/00, B23K 26/211, B23K 26/21, B23K 26/70

(54) **CONDUIT SYSTEM FOR HANDHELD LASER WELDER**

(30) Priority: 11.10.2024 US 202463706130 P; 23.06.2025 US 202519245605
(71) Applicant: Lincoln Global, Inc., Cleveland, OH 44117 (US)
(72) Inventor: TROUP, Jonathan T., Willoughby, 44094 (US); DRAGOLICH, Donald A., Huntsburg, 44046 (US)
(74) Representative: Hoyng Rokh Monegier B.V.

(57) **Abstract**

A laser welding gun includes a focal tube, a nozzle extending from the focal tube, and a mounting armature adjustably positionable along a length of the focal tube. A conduit assembly extends from a wire feeder and is attached to the focal tube by the mounting armature. The conduit assembly includes a removable tip holder secured to the mounting armature. The mounting armature provides adjustment of an angle between the conduit assembly and the focal tube, and an orientation of the mounting armature is rotationally adjustable around a circumference of the focal tube.

## Description

### BACKGROUND OF THE INVENTION

The present invention relates to handheld laser welders, and in particular to handheld laser welders that utilize a filler wire that is fed to the handheld torch or gun. Some handheld laser welders utilize a filler wire that is fed by a wire feeder toward the tip of the laser welding gun. Such welding guns may include a bracket that supports a section of conduit through which the filler wire is fed. The bracket holds the section of conduit in an orientation that directs the filler wire toward the end of the welding gun. However, such brackets lack adjustability to account for filler wire cast (e.g., the wire may naturally bend away from the tip of the welding gun) or a desired wire discharge position along the length of the welding gun. Conventional laser welding guns also lack a way to quickly or conveniently switch between single and dual wire operations. It would be desirable to address such deficiencies in laser welding guns that utilize one or more filler wires.

### BRIEF SUMMARY OF THE INVENTION

The following summary presents a simplified summary in order to provide a basic understanding of some aspects of the devices, systems and/or methods discussed herein. This summary is not an extensive overview of the devices, systems and/or methods discussed herein. It is not intended to identify critical elements or to delineate the scope of such devices, systems and/or methods. Its sole purpose is to present some concepts in a simplified form as a prelude to the more detailed description that is presented later.

In accordance with one aspect of the present invention, provided is a laser welding gun. The laser welding gun includes a focal tube, a nozzle extending from the focal tube, and a mounting armature adjustably positionable along a length of the focal tube. A conduit assembly extends from a wire feeder and is attached to the focal tube by the mounting armature. The conduit assembly includes a removable tip holder secured to the mounting armature. The mounting armature provides adjustment of an angle between the conduit assembly and the focal tube, and an orientation of the mounting armature is rotationally adjustable around a circumference of the focal tube.

In accordance with another aspect of the present invention, provided is a laser welding gun. The laser welding gun includes a focal tube, a nozzle extending from the focal tube, and a mounting armature adjustably positionable along a length of the focal tube. A conduit assembly extends from a wire feeder and is attached to the focal tube by the mounting armature. The conduit assembly includes a removable tip holder, and a tip holder receiver. The removable tip holder and the tip holder receiver are attached to the mounting armature. The mounting armature provides adjustment of an angle between the conduit assembly and the focal tube, and an orientation of the mounting armature is rotationally adjustable around a circumference of the focal tube.

In accordance with another aspect of the present invention, provided is a laser welding gun. The laser welding gun includes a focal tube, a nozzle extending from the focal tube, and a mounting armature adjustably positionable along a length of the focal tube. A conduit assembly extends from a wire feeder and is attached to the focal tube by the mounting armature. The conduit assembly includes a removable tip holder attached to the mounting armature, a contact tip attached to the removable tip holder, and a tip holder receiver attached to the mounting armature and having a central opening. A portion of the removable tip holder extends into the central opening of the tip holder receiver when the removable tip holder is attached to the mounting armature, and the removable tip holder is rotationally adjustable within the mounting armature and the tip holder receiver. The mounting armature provides both adjustment of the mounting position of the conduit assembly along the length of the focal tube, and rotational adjustment of an orientation of the mounting armature around a circumference of the focal tube.

### BRIEF DESCRIPTION OF THE DRAWINGS

The foregoing and other aspects of the invention will become apparent to those skilled in the art to which the invention relates upon reading the following description with reference to the accompanying drawings, in which:
FIG. 1 shows a handheld laser welding gun with attached conduit assembly;
FIG. 2 is a perspective view of the conduit assembly;
FIG. 3 is an exploded view of the conduit assembly;
FIG. 4 shows the conduit assembly;
FIG. 5 shows a mounting armature of the conduit assembly; and
FIG. 6 shows a portion of the handheld laser welding gun.

### DETAILED DESCRIPTION OF THE INVENTION

The present invention relates to handheld laser welders, and in particular to handheld laser welders that utilize a filler wire that is fed to the handheld torch or gun. The present invention will now be described with reference to the drawings, wherein like reference numerals are used to refer to like elements throughout. It is to be appreciated that the various drawings are not necessarily drawn to scale from one figure to another nor inside a given figure, and in particular that the size of the components are arbitrarily drawn for facilitating the understanding of the drawings. In the following description, for purposes of explanation, numerous specific details are set forth in order to provide a thorough understanding of the present invention. It may be evident, however, that the present invention can be practiced without these specific details. Additionally, other embodiments of the invention are possible and the invention is capable of being practiced and carried out in ways other than as described. The terminology and phraseology used in describing the invention is employed for the purpose of promoting an understanding of the invention and should not be taken as limiting.

Before discussing further details, some general aspects of the invention are provided in the following. According to a first aspect, a laser welding gun is provided, comprising:
a focal tube;
a nozzle extending from the focal tube;
a mounting armature adjustably positionable along a length of the focal tube; and
a conduit assembly extending from a wire feeder and attached to the focal tube by the mounting armature, wherein the conduit assembly includes a removable tip holder secured to the mounting armature, and
wherein the mounting armature provides adjustment of an angle between the conduit assembly and the focal tube, and an orientation of the mounting armature is rotationally adjustable around a circumference of the focal tube.

In various embodiments the conduit assembly further comprises a contact tip attached to the removable tip holder, wherein the contact tip is attachable to the removable tip holder by rotation of the contact tip through less than 360 degrees.

In various embodiments the conduit assembly further comprises flexible tubing and a tip holder receiver attached to flexible tubing, wherein a portion of the removable tip holder extends into a central opening of the tip holder receiver when the removable tip holder is secured to the mounting armature.

In various embodiments the conduit assembly further comprises a contact tip attached to the removable tip holder, wherein the removable tip holder is rotationally adjustable within the mounting armature and the tip holder receiver.

In various embodiments the tip holder receiver and the mounting armature have respective aligned radial bores for receiving an attachment screw.

In various embodiments the mounting armature includes a first loop that receives the focal tube, and a second loop that receives the tip holder receiver.

In various embodiments an angle between the first loop and the second loop is adjustable to provide the adjustment of the angle between the conduit assembly and the focal tube.

According to a second aspect, a laser welding gun is provided, comprising:
a focal tube;
a nozzle extending from the focal tube;
a mounting armature adjustably positionable along a length of the focal tube; and
a conduit assembly extending from a wire feeder and attached to the focal tube by the mounting armature, wherein the conduit assembly includes:
   a removable tip holder; and
   a tip holder receiver, wherein the removable tip holder and the tip holder receiver are attached to the mounting armature,
   wherein the mounting armature provides adjustment of an angle between the conduit assembly and the focal tube, and an orientation of the mounting armature is rotationally adjustable around a circumference of the focal tube.

In various embodiments the conduit assembly further comprises a contact tip attached to the removable tip holder, wherein the contact tip is attachable to the removable tip holder by rotation of the contact tip through less than 360 degrees.

In various embodiments a portion of the removable tip holder extends into a central opening of the tip holder receiver.

In various embodiments the conduit assembly further comprises a contact tip attached to the removable tip holder, wherein the removable tip holder is rotationally adjustable within the mounting armature and the tip holder receiver.

In various embodiments the tip holder receiver and the mounting armature have respective aligned radial bores for receiving an attachment screw.

In various embodiments the mounting armature includes a first loop that receives the focal tube, and a second loop that receives the tip holder receiver.

In various embodiments an angle between the first loop and the second loop is adjustable to provide the adjustment of the angle between the conduit assembly and the focal tube.

According to a third aspect, a laser welding gun is provided, comprising:
a focal tube;
a nozzle extending from the focal tube;
a mounting armature adjustably positionable along a length of the focal tube; and
a conduit assembly extending from a wire feeder and attached to the focal tube by the mounting armature, wherein the conduit assembly includes:
   a removable tip holder attached to the mounting armature;
   a contact tip attached to the removable tip holder; and
   a tip holder receiver attached to the mounting armature and having a central opening, wherein a portion of the removable tip holder extends into the central opening of the tip holder receiver when the removable tip holder is attached to the mounting armature, and the removable tip holder is rotationally adjustable within the mounting armature and the tip holder receiver, and
   wherein the mounting armature provides both adjustment of the mounting position of the conduit assembly along the length of the focal tube, and rotational adjustment of an orientation of the mounting armature around a circumference of the focal tube.

In various embodiments the conduit assembly further comprises a contact tip attached to the removable tip holder, wherein the contact tip is attachable to the removable tip holder by rotation of the contact tip through less than 360 degrees.

In various embodiments the tip holder receiver and the mounting armature have respective aligned radial bores for receiving an attachment screw.

In various embodiments the mounting armature includes a first loop that receives the focal tube, and a second loop that receives the tip holder receiver.

In various embodiments an angle between the first loop and the second loop is adjustable.

As used herein, "at least one", "one or more", and "and/or" are open-ended expressions that are both conjunctive and disjunctive in operation. For example, each of the expressions "at least one of A, B and C", "at least one of A, B, or C", "one or more of A, B, and C", "one or more of A, B, or C" and "A, B, and/or C" means A alone, B alone, C alone, A and B together, A and C together, B and C together, or A, B and C together. Any disjunctive word or phrase presenting two or more alternative terms, whether in the description of embodiments, claims, or drawings, should be understood to contemplate the possibilities of including one of the terms, either of the terms, or both terms. For example, the phrase "A or B" should be understood to include the possibilities of "A" or "B" or "A and B."

While embodiments of the present invention described herein are discussed in the context of laser welding, other embodiments of the invention are not limited thereto. For example, embodiments of the present invention could be used in metal deposition operations that are similar to welding, such hardfacing, and cladding. As used herein, the term "welding" is intended to encompass all of these technologies as they all involve material deposition to either join or build up a workpiece.

Conventional handheld laser welding guns that utilize a fed filler wire lack a way to quickly switch between single wire and multiwire (e.g., dual wire) operations, and do not have an adjustment to account for the cast of the filler wire. The system disclosed herein uses interchangeable parts to allow the user to switch between single wire and dual wire processes. Multiple screw-on nozzles are available to accommodate the number and size of the filler wires. A removable tip holder for a contact tip can be conveniently switched out to accommodate different contact tips for different numbers and sizes of wires. The nozzles, removable tip holders and contact tips make up the interchangeable parts that enable the user to quickly switch between single and dual wire processes. The system also allows the user to adjust the linear mounting position of the conduit assembly on the focal tube of the gun, the mounting angle of the conduit assembly, and the rotational position of the wires to account for their cast and pitch. This adjustability allows for fine tuning the set-up of the gun for each welding process.

The conduit or conduit assembly discussed herein can use industry standard wire feeder connections, liners and contact tips. The liner is surrounded by flexible tubing which is terminated at the gun-end of the conduit assembly with a subassembly that includes both an adjustable armature and a removable tip holder that holds the desired contact tip. The contact tip is not energized and does not conduct electricity to the filler wire unless the system is configured for a "hot wire" welding operation. The contact tip helps direct the filler wire to a trough on the laser nozzle, which then directs the filler wire to intersect with the laser beam. As is known in the art, the nozzle directs shielding gas to the weld pool and the nozzle's trough serves to guide the filler wire to the laser beam. At the upstream wire feeder end of the conduit assembly, there can be an industry standard feeder connection.

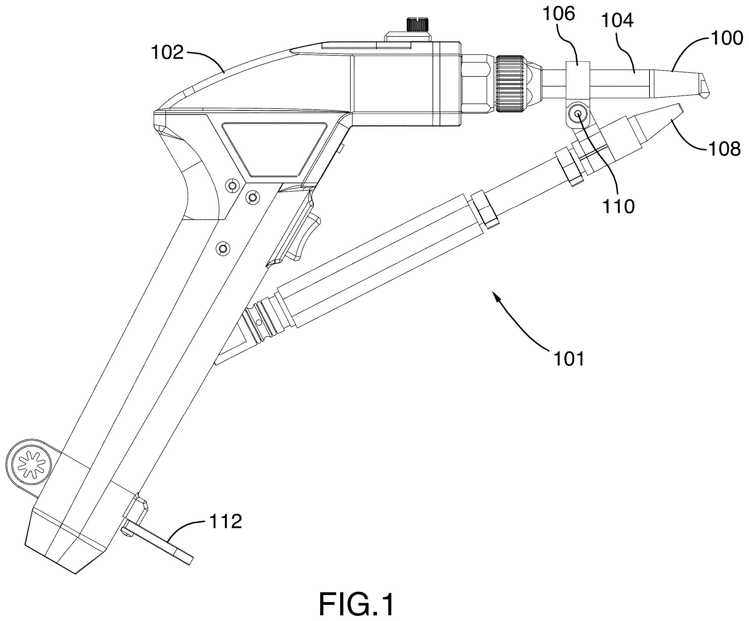

Figure 1 shows the conduit system or conduit assembly 101 and nozzle 100 mounted onto a laser welding gun 102 of a laser welding system. The nozzle 100 is attached to a focal tube 104 and extends from the focal tube. For example, the nozzle 100 screws into the end of the focal tube 104 at the distal end of the gun 102. A mounting armature 106 of the conduit assembly 101 slides onto the focal tube 104. The mounting armature 106 is adjustably positionable along the length of the focal tube 104 and can be moved forward or rearward along the focal tube as desired. Both the angle formed between the conduit assembly 101 and the focal tube 104, and the linear position of the mounting armature 106 on the focal tube 104 can be adjusted by the mounting armature. In Fig. 1, it can be seen that the angle formed between the conduit assembly 101 and the focal tube 104 is an acute angle. The angle can be adjusted as desired, such as from generally parallel or 0 degrees to an appropriate acute angle that directs the filler wire or wires to the trough of the nozzle 100. The angle formed between the conduit assembly 101 and the focal tube 104, and the linear position of the mounting armature on the focal tube, can be adjusted by loosening a screw 110 on the mounting armature 106. Moreover, the orientation of the mounting armature 106 is rotationally adjustable around the circumference of the focal tube 104, for example to adjust for the cast/pitch of the filler wire exiting the contact tip 108 of the conduit assembly 101 and to direct the filler wire to the trough of the nozzle 100. Once the desired wire feed angle (angle between the conduit assembly 101 and the focal tube 104), armature rotational angle around the focal tube, and the linear position of the armature 106 along the focal tube are determined, these can be locked in place by tightening the screw 110 on the armature. The welding gun 102 can include a clip 112 at the bottom of the gun's handle, and the flexible tubing of the conduit assembly 101 will pass through the clip.

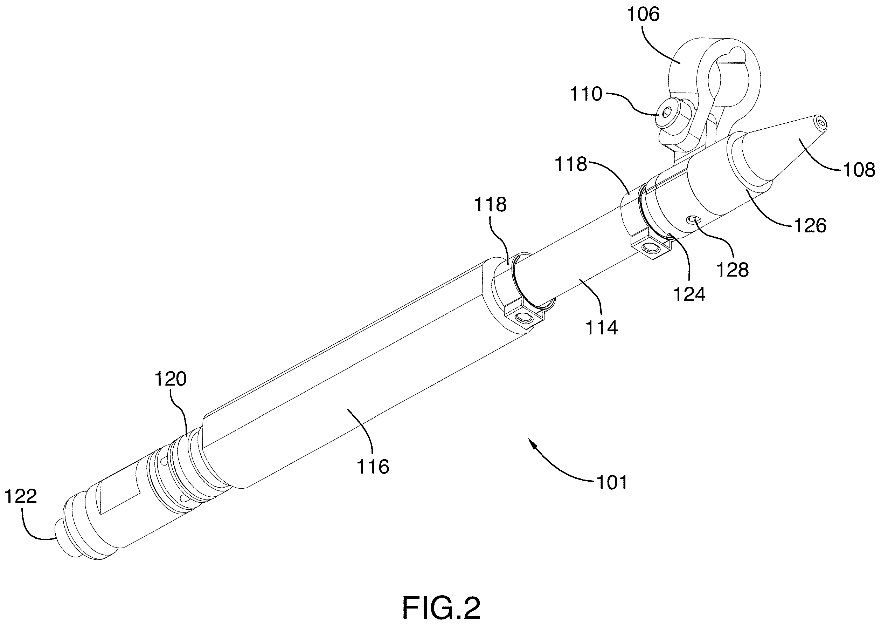

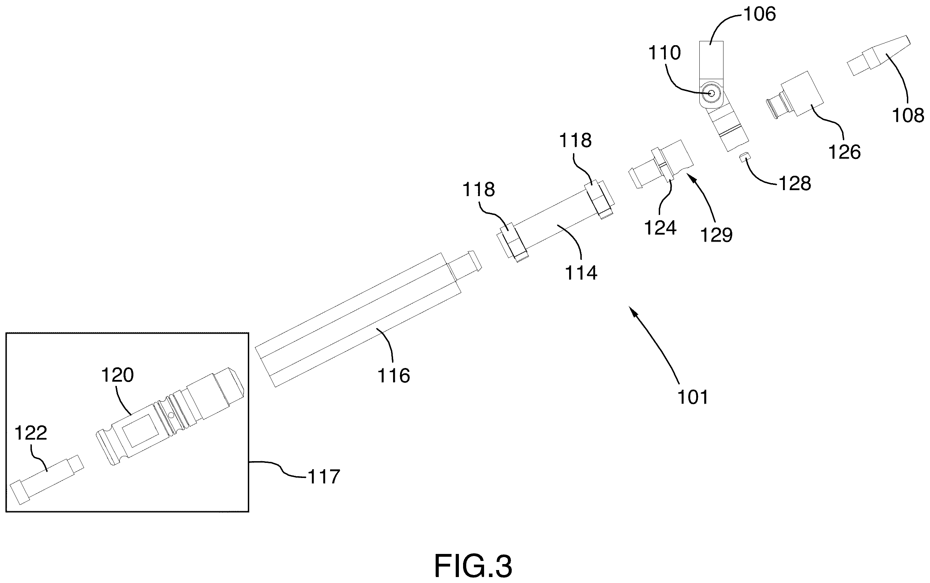

Figure 2 shows a perspective view of the conduit assembly 101, and Fig. 3 is an exploded view of the conduit assembly. The conduit assembly 101 includes flexible tubing 114, such as rubber or rubber-like (elastomeric) tubing. The conduit assembly 101 is not drawn to scale in Figs. 2 and 3, and the flexible tubing 114 is in practice much longer than it appears in the figures. The flexible tubing 114 extends from the laser welding gun to an upstream wire feeder 117 that drives the filler wire or wires through the conduit assembly 101 to the laser beam emitted by the welding gun. The length of the flexible tubing 114 can vary depending on user requirements, system setup, etc.

At the wire feeder 117 end of the conduit assembly 101 is a barbed connector 116. The barbed connector 116 is inserted into the end of the flexible tubing 114 and is held in place by a clip 118, such as a pinch clamp. The barbed connector 116 connects the flexible tubing 114 to a standard wire feeder connector 120, which threads into the barbed connector. A liner (not shown) for the filler wire can be inserted into the conduit assembly 101 from the wire feeder connector 120 end. The liner's bushing 122 is inserted into the wire feeder connector 120 and will fit flush against the end face of the wire feeder connector. The liner's bushing 122 is held in place by a set screw on the wire feeder connector 120.

At the armature 106 end, the flexible tubing 114 is attached to a tip holder receiver 124. The tip holder receiver 124 can have a barbed connector that is inserted into the end of the flexible tubing 114 and is attached to the tubing by another clip 118. The tip holder receiver 124 has a central bore or central opening, and a removable tip holder 126 is inserted into the tip holder receiver 124. In particular, a rear portion of the removable tip holder 126 extends into the central opening of the tip holder receiver 124 when they are attached. The removable tip holder 126 and the tip holder receiver 124 are secured to the to the mounting armature 106 by an attachment screw, such as a set screw 128. The tip holder receiver 124 and the mounting armature 106, when assembled, have respective aligned and threaded radial bores for receiving the set screw 128. The set screw 128 extends through the radial bore 129 in the tip holder receiver 124 to hold the removable tip holder 126 in place within the mounting armature 106. The set screw 128 can be loosened to allow removal and replacement of the removable tip holder 126 from the conduit assembly 101 without detaching the tip holder receiver 124 from the mounting armature 106. The removable tip holder 126 can be replaced as needed to accommodate various different types of contact tips 108. For example, contact tips for single wire applications typically have multiple threads requiring multiple turns to attach the contact tip. In single wire applications, the contact tip is installed over the end of the filler wire (e.g., the filler wire is pushed through the central bore of the contact tip) and the contact tip is rotated around the filler wire as it is threaded into the removable tip holder 126. For example, the removable tip holder 126 can have female threads to receive the male threaded end of a contact tip 108 for a single wire welding process. However, such a threaded connection is not appropriate for dual wire applications because the filler wires will become twisted together as the contact tip is installed. The contact tip for a dual wire welding process may have a cam or cams, rather than male threads, that allow the contact tip to be installed in the removable tip holder 126 with less than a 360 degree rotation of the contact tip. Thus, for dual wire or other multiwire applications, the contact tip 108 is attachable to the removable tip holder 126 by rotation of the contact tip through less than 360 degrees, such as via a quarter turn for example, so that the filler wires are not twisted during installation of the contact tip. Loosening the set screw 128 allows the appropriate removable tip holder 126 to be attached to the conduit assembly 101 for the desired welding application (e.g., single wire or multiwire) without detaching the tip holder receiver 124. Loosening the set screw 128 also allows the user to rotate the front end of the conduit assembly 101 (e.g., rotate the removable tip holder 126 and the attached contact tip 108) to adjust for the cast and pitch of the filler wire to direct the filler wire toward the trough of the nozzle at the end of the welding gun. Thus, the removable tip holder 126, along with the attached contact tip 108, are rotationally adjustable within the mounting armature 106 and the tip holder receiver 124. Further loosening the set screw allows the tip holder receiver 124 to be removed from the mounting armature 106.

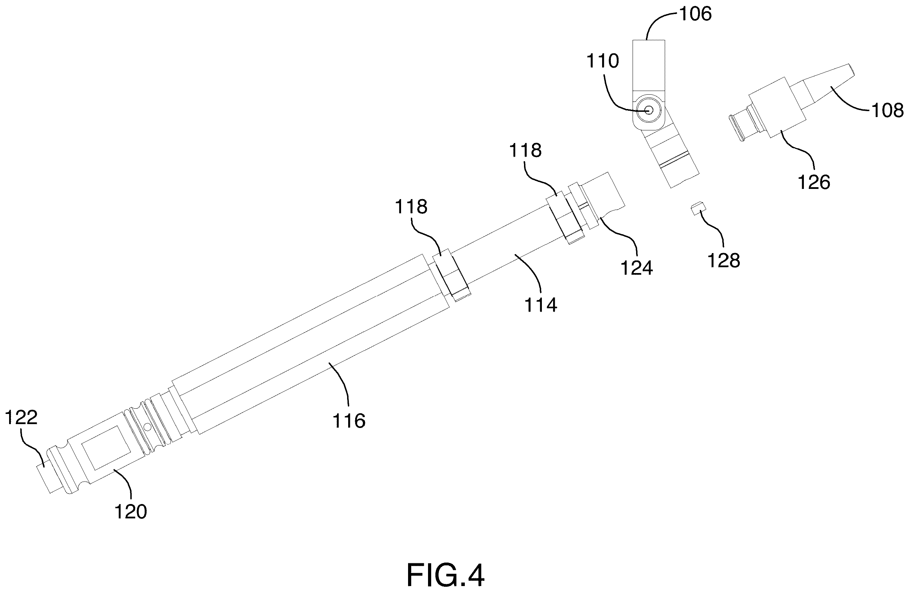

Figure 4 shows the conduit assembly 101 with the tip holder receiver 124 and the removable tip holder 126 detached from the mounting armature 106. The top screw 110 on the mounting armature 106 permits adjustment the armature's angle, the armature's rotational angle around the focal tube, and the linear position of the armature along the focal tube. The top screw 110 could be a shoulder screw, a fully-threaded screw with a washer, or any other suitable fastener. The set screw 128 allows for removable tip holders 126 to be interchangeable and allows for rotation of the front end of the conduit assembly 101 to better seat the filler wire or wires into the nozzle's guide trough. The total amount of adjustability provided by the conduit assembly 101 is substantial. The user has the ability to adjust the filler wire feeding angle, adjust the linear position of the conduit assembly 101 along the focal tube to adjust for different focal lengths, and adjust the rotational position of the filler wires, all via the mounting armature 106. The tip holder receiver 124, mounting armature 106, interchangeable contact tip holders 126, contact tips 108 and nozzles work together to allow for different configurations of single or multiwire (e.g., dual wire) laser welding with various filler wire sizes.

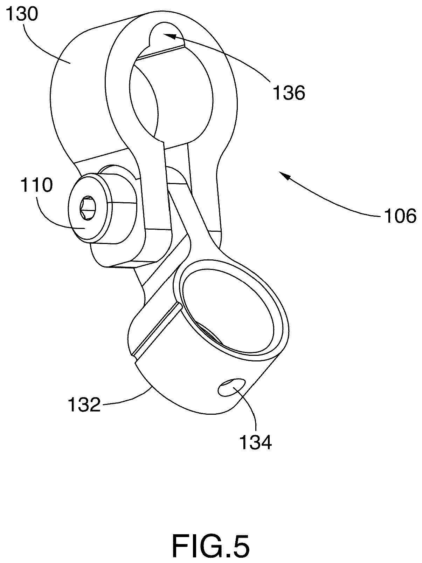

Figure 5 is a perspective view of the mounting armature 106. The mounting armature includes a first loop 130 (upper loop) that receives the focal tube on the welding gun. The first loop 130 is slid over the focal tube to a desired position along the focal tube. The first loop 130 also allows rotational adjustment of the armature around the focal tube if desired. The mounting armature 106 also has a second loop 132 (lower loop) that receives the tip holder receiver. The threaded radial bore 134 that receives the set screw 128 (Fig. 4) is located on the second loop 132 of the mounting armature 106. The angle between the first loop 130 and the second loop 132 is adjustable to provide adjustment of the angle between the conduit assembly and the focal tube. The angle between the first loop 130 and the second loop 132, and the mounting position of the armature 106 along the focal tube, is set by tightening screw 110. In certain embodiments, the first loop 130 can include an indention 136 that allows the first loop to bend or flex as screw 110 is tightened, to facilitate the mounting armature's 106 clamping along the focal tube.

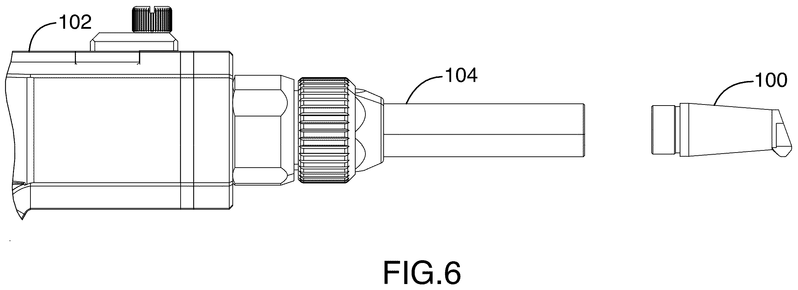

Figure 6 shows a portion of the handheld laser welding gun 102. Various different nozzles 100 can be attached to the end of the focal tube 104 of the gun 102. The welding gun 102 can be used with various different nozzles with differently sized troughs to guide different numbers and sizes of filler wires to intersect with the laser beam emitted by the gun.

In certain embodiments, the conduit assembly can include a collet and collet nut for securing the removable tip holder in place. Such an embodiment is disclosed in U.S. Provisional Patent Application Serial Number 63/706,130, filed on October 11, 2024, which is incorporated herein by reference. In certain embodiments, the conduit assembly can be configured for "hot wire" welding in which the filler wire is heated to near melting. In such embodiments, the contact tip can conduct heating electrical current to the filler wire, and such heating electrical current can be provided by the wire feeder through the wire feeder connector.

The filler wires discussed herein could be solid wires or wires, such as metal-cored wires or flux-cored wires. The filler wires could have a circular cross-sectional shape, or have other, non-circular, cross-sectional shapes such as a flatted or strip shape. Strip-shaped filler wires could be useful in hardfacing and/or cladding operations to increase deposition rate. In certain embodiments, the contact tip and/or the conduit assembly of the laser welding gun can be configured to handle or direct a strip-shaped filler wire having a non-circular cross-sectional shape toward the nozzle on the torch.

It should be evident that this disclosure is by way of example and that various changes may be made by adding, modifying or eliminating details without departing from the fair scope of the teaching contained in this disclosure. The invention is therefore not limited to particular details of this disclosure except to the extent that the following claims are necessarily so limited.

## Claims

1. A laser welding gun, comprising:
a focal tube;
a nozzle extending from the focal tube;
a mounting armature adjustably positionable along a length of the focal tube; and
a conduit assembly extending from a wire feeder and attached to the focal tube by the mounting armature, wherein the conduit assembly includes a removable tip holder secured to the mounting armature, and
wherein the mounting armature provides adjustment of an angle between the conduit assembly and the focal tube, and an orientation of the mounting armature is rotationally adjustable around a circumference of the focal tube.

2. The laser welding gun of claim 1, wherein the conduit assembly further comprises a contact tip attached to the removable tip holder, wherein the contact tip is attachable to the removable tip holder by rotation of the contact tip through less than 360 degrees.

3. The laser welding gun of any preceding claim, wherein the conduit assembly further comprises flexible tubing and a tip holder receiver attached to flexible tubing, wherein a portion of the removable tip holder extends into a central opening of the tip holder receiver when the removable tip holder is secured to the mounting armature4.

4. The laser welding gun of claim 3, wherein the conduit assembly further comprises a contact tip attached to the removable tip holder, wherein the removable tip holder is rotationally adjustable within the mounting armature and the tip holder receiver.

5. The laser welding gun of claims 3 or 4, wherein the tip holder receiver and the mounting armature have respective aligned radial bores for receiving an attachment screw.

6. The laser welding gun of any one of claims 3 to 5, wherein the mounting armature includes a first loop that receives the focal tube, and a second loop that receives the tip holder receiver.

7. The laser welding gun of claim 6, wherein an angle between the first loop and the second loop is adjustable to provide the adjustment of the angle between the conduit assembly and the focal tube.
